# EUROPEAN PATENT SPECIFICATION

(11) **EP 0 497 787 B1**
(45) Date of publication and mention of the grant of the patent: **26.06.1996**
(21) Application number: 90913796.0
(22) Date of filing: 05.09.1990
(51) Int. Cl.: B01D 5/00, B01D 53/40, F23J 15/00, F28D 7/02

(54) **METHOD FOR FRACTIONAL CONDENSATION OF ACID COMBUSTION GAS COMPONENTS AND APPARATUS FOR EXECUTING THE METHOD**
VERFAHREN ZUR FRAKTIONIERTEN KONDENSATION VON SAUREM VERBRENNUNGSGAS UND VORRICHTUNG ZUR DURCHFÜHRUNG DES VERFAHRENS
PROCEDE DE CONDENSATION FRACTIONNELLE DE COMPOSANTS GAZEUX DE COMBUSTION D'ACIDE ET APPAREIL DE MISE EN UVRE DU PROCEDE

(30) Priority: 06.09.1989 DK 4403/89
(43) Date of publication of application: 12.08.1992
(73) Proprietor: FUGLEDE, Hans, DK-4913 Horslunde (DK)
(72) Inventor: FUGLEDE, Hans, DK-4913 Horslunde (DK)
(74) Representative: Stellinger, Jens-Holger
(86) International application number: DK9000230
(87) International publication number: WO9103295

(56) References cited:
- EP-A- 0 131 187
- DE-A- 2 325 507
- DE-A- 3 329 823
- DE-A- 3 334 408
- DE-A- 3 343 962
- DK-B- 156 315

## Description

The invention concerns a method for fractional condensation of acid combustion gas components in a condenser, where a peroxide solution is added to a suitable quantity of excess air and an apparatus for the execution of this method.

In the course of time many attempts have been made to remove the acid combustion gas components by condensation. So far these attempts have failed due to severe corrosion problems, even so by the use of the best corrosion-resistant stainless steel qualities.

DE patent 33 29 823 suggests the addition of fresh air or water at a humidity content between 85 and 120 g/m³ at a temperature >110°C, with a subsequent gradual cooling. A further oxidant is added with a view to precipitating sulphuric acid, and this precipitation takes place at 90°C. It is stated that for the gradual cooling several heat exchangers are being used which each cool down to a prearranged temperature. Furthermore, it is indicated that the oxidant is added to the combustion gas after the first heat exchanger in the precipitator, with the result that the SO₂ does not oxidize until during the precipitation of the sulphuric acid at 90°C. The dew point of saturated steam is below 90°C and this contributes to dilute the precipitated sulphuric acid at approx. 5 percentage by weight. At this dilution sulphuric acid is extremely reactive due to a small oxygen pressure. This will cause a heat exchanger or a precipitator made from metal to corrode very quickly after which the efficiency of this system soon vanishes.

Other applied systems for the removal of acid combustion gas components make use of neutralization in so-called scrubbers where the combustion gasses pass large shower systems of alkaline water. This results in immense water pollution problems, so far unsolved.

Furthermore there are problems in dry systems with quick lime or atomizers with lime slurry, where large amounts of dirty gypsum are produced, the commercial value of which is insignificant at present.

Other known methods of combustion gas purification concern catalytic waste gas purification by the addition of various supplementary materials. The disadvantage of such processes is that the catalytic agents are quickly polluted, as the gas contains a large amount of combustion products which fall down on the surfaces, necessitating very frequent laborious and expensive cleaning of the catalytic agents and their vehicles for a continued efficiency. The removal of these waste products involves great difficulties.

Consequently the reason for this invention is to procure a method for fractional condensation of combustion gasses, avoiding the above-mentioned disadvantages of the previously known methods, where the latent heat energy of the combustion gases can be utilized economically. It is a further aim that the precipitated purification products should be economical, and that the combustion gas can be utilized, reducing the price of the combustion gas purification. Furthermore, this system should reduce the previous strain on the environment and the atmosphere.

To attain these ends by this invention it is suggested, that a dispersed, surface-increasing filter aid is added to and suspended in the peroxide solution at a temperature of about 200°C before the combustion gas enters the condenser, that condensing and draining of H₂SO₄ occurs at a temperature interval of 160°C-140°C, that condensing and draining of HNO₃ occurs at a temperature interval of 120°-110°C, and that condensation of residual products takes place at about 20°C.

An apparatus for performing this method is equipped with a well-known combustion gas condenser consisting of a tube coil heat exchanger according to DK-B-156315, tube coil being looped and especially glued onto the exterior of the container, the tube coil is enclosed tightly in a cover and each exterior coil is welded or glued together with the adjacent coil either directly or by means of distance pieces, and where the tube coil itself is filled with a hardening expanded elastomeric foam. The characteristic of this combustion gas condenser is the inner spiral tube along the whole internal face of the container which reaches from the container wall into a concentric inner mantle, stretching from the top of the container wall to a distance from the bottom corresponding to a spiral coil, and on suitable places in well defined temperature zones draining units have been placed along the spiral tube.

At the indicated temperature interval the sulphuric acid occurs in a solution of 60-70 percentage by weight, that is in such a high concentration that the sulphuric acid is not especially reactive. The same applies to the drained nitric acid in the following temperature interval. Consequently it is possible to use ordinary types of steel for the construction of the condenser, such as CORTEN® steel or similar types protected by an oxide film. This oxide film is maintained by the addition of the oxidant to the surface-increasing filter aid as the acid radicals of the combustion gas are changed from having a negative oxidation potential to a positive oxidation potential. The surface-increasing filter aid, which may suitably be kieselguhr, which is suspended in the peroxide solution serves furthermore as a condensation nucleus at the condensation and may be retained in a filter to avoid any possible dust pollution.

The removal of the aggressive acid combustion gas components is necessary before condensation to avoid corrosion of the apparatus, and they must be removed before the temperature of the gas during cooling reaches the water dew point, i.e. before the sulphuric acid is further diluted. As peroxide is added formation of water will occur during oxidation, which is why the sulphuric acid condenses in the indicated range of temperature and concentration. The acid components will most frequently occur as SO₂ and NOₓ and the method of the invention is aimed at condensing these and thus producing a valuable commercial article. The oxidation and the hydrogenation of the acid combustion gas radicals for usable acid condensates will occur at approx. 220°C momentarily by e.g. air injection in the combustion gas funnel of a synergistic combination of the aqueous peroxide solution with the suspended and finely pulverized filter aid with a large surface-increasing solid effect will promote the process and facilitate the subsequent purification of the acid condensate.

The synergist initiator of the process may be e.g. hydrogen peroxide plus kieselguhr or diatomite in an aqueous vehicle which by the addition in the approx. 220°C warm combustion gas explosively expands accompanied by atomized surface-increasing solid.

In the outer coolant circuit of the combustion gas condenser, which is used for execution of the invented method, a sectional area of flow has been provided which is approx. triangular, as the container wall constitutes one side while the other two sides of the sectional area consists of the pipe coil wall on two adjacent pipe coils, that is two quadrant arcs. With this sectional area turbulence will occur even at relatively small flow velocities, ensuring the possibility of the flowing vehicle to exchange heat energy with the combustion gas flowing on the other side of the container wall. This combustion gas flows in reverse direction on the inside of the container wall in a spiral tube, causing turbulence of this flow along the inside. The two turbulent flows will thus ensure an effective heat transmission across the container wall which is a prerequisite of a positive outcome of the condensing where the condensation heat from the fractionally precipitated acid condensers must be carried away. The fractionally precipitated acid condensers have a satisfactorily high purity degree as they are precipitated in various well defined temperature zones. The acid condensates for H₂SO₄ and HNO₃ have different dew points during cooling which is exploited through the construction of the inner spiral tube and by the location of the outlets. Typical dew points of H₂SO₄ at the prevailing concentration are a temperature interval between 160°C and 140°C and for HNO₃ between 120°C and 110°C.

During the inflow to the condenser the combustion gas temperature typically ranges above 220°C, and when the cooling water circulates reversely its outlet temperature will typically be approx. 170°C, permitting the addition of excess air during combustion and thus increasing the combustion gas temperature. According to the invention the combustion gas condenser will thus enter a steam generator circuit as an extra heating surface.

With an appropriate construction of the combustion gas condenser this consists of an upright, closed cylindrical tank which is coiled with the above-mentioned spirally wound, filled tube coil. A suitable material for the container could be corrosion resistant steel, and the ashless gas is guided through the container from the top, e.g. by means of a high-pressure centrifugal fan which presses the gases through the spirally wound convolution which is welded to the inside of the container. The spiral extends from the container wall into the inner mantle, which could consist of fixed, flexible stocking of glass fibre cloth - silicone rubber which will stand temperatures up till approx. 220°C. The flexible stocking is bottomless and is closed below by a thick tube ferrule in a suitable distance above the bottom.

During cleaning it is possible to hoist the flexible stocking to the top of the container for inspection and cleaning of the surface of the spiral and the container.

The inner spiral surface controls the turbulent passage of the gas along the inner cooling surface, and transfers furthermore a considerable heat to the spiral surface, which in principle is equivalent to an inclined ribbed tube. In an appropriate version of the spiral surface this is mounted in an angle of approx. 85° from vertical, forming a suitable collection channel of the condensate which further facilitates the placement of drains in well defined temperature zones.

It is advised to provide the condenser with a cleanout in the bottom.

The invention is further illustrated below by means of an example of one embodiment. Thereby using a combustion gas condenser according to the invention.

The combustion gas condenser is provided with an inlet pipe of the combustion gases with the indication of a centrifugal fan which presses the combustion gases through the spirally wound cooling channel. Before entry of the combustion gases to the condenser addition has been made of the synergist combination of aqueous peroxide solution with suspended filter aid together with excess air according to the method of the invention. The cooling channel has been formed by the container wall and by the spiral unit welded on to it together with the inner mantle which in the present embodiment is flexible, however, it bears against the inner edge of the spiral unit. The inner mantle is terminated at a distance from the bottom which is approximated to the size of the bottom spiral turn. The ascending height of the spiral unit is monotonously decreasing in the flow direction, ensuring a constant flow velocity of the combustion gases, and consequently a constant turbulence which is independent of the temperature-dependent volume reduction of the combustion gases.

In the bottom of the condenser a cleanout has been positioned which, together with a flexible inner mantle, facilitate the access for inspection and cleaning. Furthermore, a drain for condensed water has been placed in the bottom of the condenser. These drains could suitably be shaped as U-tubes.

After passing through the spiral unit the combustion gases pass the lower edge of the inner mantle. From here they are led through the outlet of the condenser possibly controlled by a valve, and carried away.

After passing the bottom edge of the inner mantle the temperature of the combustion gases is now approx. 30°C, with only nitrogen and carbon dioxide left together with a few insignificant residues from other combustion products. The combustion gases are now so clean and with a temperature to permit their possible passage into a greenhouse where the concentration of carbon dioxide and the temperature in the greenhouse could be maintained at an optimum level for plants.

Through the method and the combustion gas condenser according to the invention the gas is effectively purified of aggressive, acid elements of condensation of the oxidized combustion gases, thus manufacturing commercially attractive purification products. The gas is purified to such an extent that it can unobjectionably be led into a greenhouse. The thermal stress and CO₂ impact of the atmospheric air is thus reduced, and a different exploitation is made possible of the latent heat energy of the combustion gas.

## Claims

1. Method for fractional condensing of acid combustion gas components in a condenser by the addition of a peroxide solution to a suitable quantity of excess fresh air, **CHARACTERIZED IN**
that a dispersed, surface-increasing filter aid is added to and suspended in the peroxide solution at a temperature of about 200°C before the combustion gas enters the condenser,
that condensing and draining of H₂SO₄ occurs at a temperature interval of 160°C-140°C,
that condensing and draining of HNO₃ occurs at a temperature interval of 120°-110°C, and
that condensation of residual products takes place at about 20°C.

2. Method according to claim 1, **CHARACTERIZED IN** the filter aid being kieselguhr in an aqueous vehicle.

3. Combustion gas condenser for the execution of the method according to claims 1 or 2, the condenser comprising a tube coil heat exchanger with a tube coil which is looped and especially glued onto the exterior of the container, the tube coil is enclosed tightly in a cover and each exterior coil is welded or glued together with the adjacent coils either directly or by means of distance pieces, and where the tube coil itself is filled with a hardening, expanded elastomeric foam, **CHARACTERIZED IN THAT** a spiral tube is arranged along the whole internal face of the container which reaches from the container wall into a concentric inner mantle, stretching from the top of the container wall to a distance from the bottom corresponding to a spiral coil, and on suitable places in well defined temperature zones draining units have been placed along the spiral tube.

4. Combustion gas condenser according to claim 3, **CHARACTERIZED IN** an upright, closed, cylindrical tank.

5. Combustion gas condenser according to claims 3 or 4, **CHARACTERIZED IN** the inner mantle being a fixed, flexible, bottomless stocking made from glass fibre cloth - silicone rubber.

6. Combustion gas condenser according to each of the above mentioned claims 3-5, **CHARACTERIZED IN THAT** the inner spiral surface is fixed in an angle of approx. 85° from vertical.

7. Combustion gas condenser according to each of the above mentioned claims 3-6, **CHARACTERIZED IN** the condenser container being provided with a cleanout in the bottom.

## Patentansprüche

1. Verfahren zur fraktionellen Kondensierung von saueren Verbrennungsgaskomponente in einem Kondensator durch Zugabe von einer Peroxidlösung zu einer entsprechenden Menge von überschüssiger frischer Luft, **dadurch gekennzeichnet**,
daß bei einer Temperatur auf über 200°C und bevor dem Eintritt des Rauchgasses in die Kondensator ein dispergiertes oberflachenerhöhendes Filter-Hilfsmittel zur Peroxidlösung zugegeben und suspendiert wird,
daß die Kondensierung und Dranung von H₂SO₄ bei einem Intervall zwischen 160°C bis 140°C stattfindet,
daß die Kondensierung und Dranung von HNO₃ bei einem Intervall zwischen 120°C bis 110°C stattfindet, und
daß die Kondensierung der Restprodukte bei etwa 20°C stattfindet.

2. Verfahren gemaß Anspruch 1, **dadurch gekennzeichnet, daß** das Filterhilfsmittel ist Kieselguhr in einem wäßrigen Medium.

3. Rauchgaskondensator zum Ausüben des Verfahrnes gemäß Anspruch 1 oder 2, wobei die Rauchgaskondensator einen Rohrspiralen-Wärmetauscher mit außen auf einer Behälterwandung umwickelter und eventuell festgeleimter Rohrspirale mit einem außeren, um die Rohrspirale eng umschlißenden Mantel umfaßt, und wobei die individuelle Bewicklung der Rohrspirale mit den angrenzenden Bewicklungen entweder direkt oder durch Abstand-Stücke, und wobei die Rohrspirale selbst mit einem massiv-härtenden, ausgedehnten, elastomerischen Schaum gefüllt ist, **dadurch gekennzeichnet, daß** eine Spiralwindung entlang der ganzen innere Fläche des Behälters vorgesehen ist, die von der Behälterwandung bis zu einem koncentrischen, inneren Mantel reicht, und sich vom Oberteil der Behälterwandung bis zu einem einer Spiralen-Windung entsprechenden Abstand vom Boden, und daß auf entsprechenden Stellen in wohl definierten Temperaturgebieten Dränierungs-Einheiten der Spiralwindung entlang vorgesehen sind.

4. Rauchgaskondensator gemäß Anspruch 3, **dadurch gekennzeichnet, daß** sie aus einem aufrechtstehenden, geschlossenen, zylindrischen Behälter besteht.

5. Rauchgaskondensator gemäß Anspruch 3 oder 4, **dadurch gekennzeichnet, daß** der innere Mantel ein stationärer, flexibler, bodenloser Strumpf ist, der aus Glasfibergewebe-Silikonegummi hergestellt ist.

6. Rauchgaskondensator gemäß jeder der obenstehenden Ansprüche 3 bis 5, **dadurch gekennzeichnet, daß** die innere Spiralwindungsfläche in einem Winkel auf etw. 85° von der senkrechter Richtung befestigt ist.

7. Rauchgaskondensator gemäß jeder der obenstehenden Ansprüche 3 bis 6, **dadurch gekennzeichnet, daß** der Kondensator-Behälter im Bodenbereich mit einer Reinigungsklappe versehen ist.

## Revendications

1. Procédé de condensation fractionelle de composants gazeux de combustion acides dans dispositifs condenseurs par l'addition d'une dissolution de peroxyde a une quantité sufficiante de l'air d'excès frais, **caractérisé en ce**
- qu'avant la pénétration du gaz de combustion dans le condenseur à une temperature d'environ 200°C est ajouté et dispersé un équipement filtrant, augmentant en surface, en suspension dans une dissolution peroxyde et une proportion convenable de l'air de réserve,
- que la condensation et le drainage de H₂SO₄ s'effectue à un interval de temperature entre 160°C à 140°C.
- que la condensation et le drainage de HNO₃ s'effectue à un interval de temperature entre 120°C à 110°C.
- que la condensation du residu s'effectue à une temperature d'environ 20°C.

2. Procédé selon la revendication 1, **caracterisé en ce que** la dissolution peroxyde est de l'eau oxygénée, et en ce que l'équipement filtrant est du kieselguhr dans un milieu aqueux.

3. Condenseur de gaz de combustion pour pratique du procédé selon les revendications 1 ou 2, où le condenseur de gaz de combustion contient un serpentin échangeur de chaleur selon le brevet d'invention n° DK-156315, équipé d'un serpentin enroulé et peut-être collé autour de la paroi extérieure du récipient et d'une chape extérieure qui est serrée autour du serpentin, ou le tour constituant extérieur est soudé ou collé aux tours adjacents soit directement soit par des entretoises, que le serpentin meme est rempli par une écume élastomère solide durcissante, **caracterisée en ce que** sur la surface intérieure de la paroi du récipient est placé un couloir pour spirale qui rase la surface intérieure du récipient, et qui s'étend de la paroi du récipient jusqu'à une chape intérieure placée concentriquement avec la paroi du récipient, qui s'étend du sommet de la paroi du récipient jusqu'à une distance du fond, qui correspond à un tour en spirale, et qu'il y a des organes d'écoulement le long du couloir pour spirale aux places utiles aux zones de température bien définies.

4. Condenseur de gaz de combustion selon la revendication 3, **caracterisé en ce** qu'il se compose d'un récipient debout, étanché, cylindrique.

5. Condenseur de gaz de combustion selon les revendications 3 ou 4, **caracterisé en ce que** la chape intérieure est un bas flexible sans base fixé, qui est fabriqué de la gomme silicone au tissu de verre.

6. Condenseur de gaz de combustion selon chacune des revendications précédentes 3 jusqu'à 5, **caracterisé en ce que** le plat spirale est fixé dans un angle d'environ 85° du vertical.

7. Condenseur de gaz de combustion selon chacune des revendications précédentes nos 3 jusqu'à 5, **caracterisé en ce que** le récipient condenseur à la base est muni d'une porte de nettoyage.
